# EUROPEAN PATENT APPLICATION

(11) **EP 4 818 776 A1**
(43) Date of publication of application: **07.10.2026**
(21) Application number: 24953576.6
(22) Date of filing: 14.11.2024
(51) Int. Cl.: G02B 6/028, G02B 6/036

(54) **ULTRALOW-LOSS OPTICAL FIBER, AND DRAWING PREPARATION METHOD FOR ULTRALOW-LOSS OPTICAL FIBER**

(30) Priority: 06.09.2024 CN 202411251986
(71) Applicant: Zhongtian Technology Fibre Optics Co., Ltd., Nantong, Jiangsu 226000 (CN); Jiangdong Technology Co., Ltd., Nantong, Jiangsu 226400 (CN); Jiangsu Zhongtian Technology Co., Ltd., Nantong, Jiangsu 226000 (CN); Zhongtian Technology Advanced Materials Co., Ltd., Nantong, Jiangsu 226000 (CN)
(72) Inventor: ZHU, Qiansheng, Nantong, Jiangsu 226000 (CN); CAO, Shanshan, Nantong, Jiangsu 226000 (CN); XIE, Shuhong, Nantong, Jiangsu 226000 (CN); LIU, Zhizhong, Nantong, Jiangsu 226000 (CN); LIU, Yuhang, Nantong, Jiangsu 226000 (CN); WANG, Zhen, Nantong, Jiangsu 226000 (CN); XU, Haitao, Nantong, Jiangsu 226000 (CN)
(74) Representative: Bandpay & Greuter
(86) International application number: PCT/CN2024/132136
(87) International publication number: WO 2026/051199

(57) **Abstract**

An ultralow-loss optical fiber and a method for preparing an ultralow-loss optical fiber by drawing. The optical fiber includes a core layer (110), and a first gradient layer (120), a second gradient layer (130), a first platform layer (140), a second platform layer (150) and an outer cladding layer (160) sequentially surrounding an outside of the core layer (110), where, a relative refractive index difference of the first gradient layer (120) and a relative refractive index difference of the second gradient layer (130) vary linearly respectively; a minimum value of the relative refractive index difference of the first gradient layer (120) is greater than a maximum value of the relative refractive index difference of the second gradient layer (130); and a relative refractive index difference of the first platform layer (140) is greater than the maximum value of the relative refractive index difference of the second gradient layer (130). The ultralow-loss optical fiber can improve the transmission performance of optical signals and reduce attenuation, and enhance the service performance of the optical fiber.

## Description

The present application claims priority to Chinese Patent Application No. 202411251986.X filed with China National Intellectual Property Administration on September 6, 2024 and entitled "Ultralow-Loss Optical Fiber, and Method for Preparing Ultralow-Loss Optical Fiber by Drawing", which is hereby incorporated by reference in its entirety.

### TECHNICAL FIELD

The present application relates to the technical field of optical fiber communication, and in particular, to an ultralow-loss optical fiber and a method for preparing an ultralow-loss optical fiber by drawing.

### BACKGROUND

Since the advent of optical fiber technology in the 1970s, it has developed rapidly and been widely used all over the world. With the explosive growth of demand for the Internet and data communication, optical fiber communication has become the mainstream technology of backbone networks. Optical fibers are not only used for long-distance communication, but also gradually deployed in metropolitan area networks, access networks and home networks, driving the rapid development of the information society.

At present, existing doped optical fibers change the optical performance of optical fibers by doping specific elements or compounds into the fiber core or cladding to meet the demands of different applications. Various types of doped optical fibers are widely applied in fields such as optical fiber amplifiers, optical fiber lasers, dispersion compensation, nonlinear optics and optical fiber sensing. Appropriate types of doped optical fibers may be selected according to specific application requirements to optimize system performance and achieve specific functions.

However, the existing doped optical fibers have the problems of high attenuation and poor service performance when transmitting optical signals.

### SUMMARY

Embodiments of the present application provide an ultralow-loss optical fiber and a method for preparing an ultralow-loss optical fiber by drawing, so as to solve the problems of high attenuation and poor service performance of existing optical fibers.

In a first aspect, an embodiment of the present application provides an ultralow-loss optical fiber, including:
a core layer, and a first gradient layer, a second gradient layer, a first platform layer, a second platform layer and an outer cladding layer sequentially surrounding an outside of the core layer; where a relative refractive index difference of the first gradient layer and a relative refractive index difference of the second gradient layer vary change linearly respectively; a minimum value of the relative refractive index difference of the first gradient layer is greater than a maximum value of the relative refractive index difference of the second gradient layer; and a relative refractive index difference of the first platform layer is greater than the maximum value of the relative refractive index difference of the second gradient layer.

In a possible implementation, the relative refractive index difference of the first gradient layer decreases linearly in a direction away from the core layer.

In a possible implementation, a distribution of the relative refractive index difference Δn(r) of the first gradient layer satisfies: $Δn \left(r\right) = {Δn}_{2} + \left({Δn}_{3}-{Δn}_{2}\right) {\left(r-r1/r2-r1\right)}^{α 1} ;$ where Δn₂ ranges from 0 to 0.05%, Δn₃ ranges from -0.2% to 0, Δn₂ is greater than Δn₃, α1 ranges from 0.5 to 2, r1 is a maximum radius of the core layer, r1 ranges from 5.5 µm to 7.5 µm, r2 - r1 is a radius range of the first gradient layer, and r2 - r1 ranges from 0.5 µm to 2 µm.

In a possible implementation, silicon dioxide, germanium dioxide, fluorine and phosphorus in the first gradient layer have a mass percentage of (1-a-b-c): a: b: c, where a ranges from 0% to 1%, b ranges from 0.01% to 0.3%, and c ranges from 0 to 0.2%.

In a possible implementation, the relative refractive index difference of the second gradient layer decreases linearly in the direction away from the core layer.

In a possible implementation, a distribution of the relative refractive index difference Δn(r) of the second gradient layer satisfies: $Δn \left(r\right) = {Δn}_{4} + \left({Δn}_{5}-{Δn}_{4}\right) {\left(r-r2/r3-r2\right)}^{α 2} ;$ where Δn₄ ranges from -0.45% to -0.2%, Δn₅ ranges from -0.65% to - 0.4%, Δn₄ is greater than Δn₅, α2 ranges from 0.5 to 3, r3 - r2 is a radius range of the second gradient layer, and r2 - r1 ranges from 4 µm to 12 µm.

In a possible implementation, silicon dioxide and fluorine in the second gradient layer have a mass percentage of 1-(0.5% to 1.5%) :(0.5% to 1.5%).

In a second aspect, an embodiment of the present application provides a method for preparing an ultralow-loss optical fiber by drawing, which is used for preparing the ultralow-loss optical fiber according to the embodiments of the present application. The method includes:
placing an optical fiber preform rod in an arc-shaped reflector for performing a preheating treatment based on a preset preheating temperature, based on a preset preheating temperature, to obtain a preheated optical fiber preform rod; and
performing a drawing treatment and a coating treatment on the preheated optical fiber preform rod, to obtain an ultralow-loss optical fiber with a coating layer.

In a possible implementation, the preheating is performed at a temperature of 1900°C to 2100°C, a distance between the arc-shaped reflector and the optical fiber preform rod is 2 cm to 15 cm, and a reflection center of the arc-shaped reflector, to which diffuse reflected light generated by heating the optical fiber preform rod is reflected, is a core layer of the optical fiber preform rod.

In a possible implementation, the performing the drawing treatment and the coating treatment on the preheated optical fiber preform rod, to obtain the ultralow-loss optical fiber with the coating layer includes:
placing the preheated optical fiber preform rod in a drawing furnace for performing the drawing treatment, to obtain a drawn optical fiber;
passing the drawn optical fiber sequentially through a plurality of annealing holding furnaces for performing a holding and annealing treatment, to obtain a held-and-annealed optical fiber; and
performing an optical fiber-coating treatment on the held-and-annealed optical fiber, and performing a curing treatment on a coating layer of an optical fiber obtained after the optical fiber-coating treatment, to obtain the ultralow-loss optical fiber with the coating layer.

In a possible implementation, a temperature in the drawing furnace for melting is 1800°C to 2200°C, the drawing furnace is filled with a protective gas, where the protective gas includes at least one of argon and helium, and the protective gas has a flow rate of 10 L/min to 50 L/min.

In a possible implementation, in the drawing treatment, a drawing speed V and an internal tension g satisfy: g=eV+f, where e ranges from 0.08 to 0.12, and f ranges from 20 to 35.

In a possible implementation, the coating layer includes an inner coating layer and an outer coating layer, where an optical fiber, obtained after the inner coating layer is applied, has a size of 180 µm to 205 µm, and an optical fiber, obtained after the outer coating layer is applied, has a size of 235 µm to 252 µm.

In a possible implementation, a material of the inner coating layer and a material of the outer coating layer are both acrylic resin, where:
the acrylic resin for the inner coating layer satisfies: an elastic modulus of ≤ 0.7 MPa, a coating viscosity of (3000 to 8000) mPa·s at 25°C, a density of (0.95 to 1.3) g/cm³, and an elongation at break of ≥ 125%;
the acrylic resin for the outer coating layer satisfies: an elastic modulus of ≥ 550 MPa, a coating viscosity of (3000 to 8000) mPa·s at 25°C, a density of (0.95 to 1.3) g/cm³, and an elongation at break of ≥ 10%.

An ultralow-loss optical fiber and a method for preparing an ultralow-loss optical fiber by drawing are provided by embodiments of the present application. By the means of arranging the first gradient layer and the second gradient layer between the core layer and the platform layer, and adjusting the relative refractive index differences of the first gradient layer and the second gradient layer, the mode distribution of the optical fiber is improved, the bending loss is reduced, the material purity and structural design are improved, the manufacturing defects are reduced, and the dispersion characteristics are optimized, so that the optical fiber has better consistency and strength, so that the transmission performance of optical signals can be improved, the attenuation is reduced, and the service performance of the optical fiber is enhanced.

### BRIEF DESCRIPTION OF DRAWINGS

The accompanying drawings, which are incorporated into and constitute a part of the specification, illustrate embodiments consistent with the present application and, together with the description, serve to explain the principle of the present application.
FIG. 1 is a schematic structural diagram of an ultralow-loss optical fiber according to the present application.
FIG. 2 is a diagram of relative refractive index differences of respective layers of an ultralow-loss optical fiber according to an embodiment of the present application.
FIG. 3 is a schematic flowchart of a method for preparing an ultralow-loss optical fiber by drawing according to an embodiment of the present application.
FIG. 4 is a schematic structural diagram of a scenario in which an optical fiber preform rod is heated using an arc-shaped reflector according to an embodiment of the present application.
FIG. 5 is a schematic structural diagram of an optical fiber drawing apparatus according to an embodiment of the present application.

### Explanation of reference signs:

100-optical fiber preform rod; 110-core layer; 120-first gradient layer; 130-second gradient layer; 140-first platform layer; 150-second platform layer; 160-outer cladding layer; 170-inner coating layer; 180-outer coating layer; 400-arc-shaped reflector; 510-rod feeder; 520-drawing furnace; 530-holding furnace unit; 540-bare fiber testing unit; 550-bare fiber protection tube; 560-coating unit; 570-curing unit; 580-optical fiber size testing unit; 590-take-up unit.

### DESCRIPTION OF EMBODIMENTS

Exemplary embodiments are described in detail herein, with examples illustrated in the accompanying drawings. When the following description refers to the accompanying drawings, the same numerals in different drawings denote the same or similar elements unless otherwise indicated. The implementations described in the following exemplary embodiments do not represent all implementations consistent with the present application. On the contrary, they are merely examples of apparatuses and methods consistent with some aspects of the present application as recited in the appended claims.

First, the terms involved in the present application are explained as follows.

Core layer (Core) is a key part of an optical fiber structure. It is the central portion of an optical fiber, and is generally made of high-purity glass or plastic. The main function of the core layer is to transmit an optical signal. The refractive index of the core layer is higher than that of a cladding layer, so as to facilitate the transmission of light inside the core layer by means of total internal reflection.

Gradient layer refers to a transition region existing between a fiber core and a cladding layer, whose refractive index varies gradually from the fiber core to the cladding layer. The design of such gradient layer aims to reduce reflection loss of light at an interface of the fiber core and the cladding layer, thereby improving the transmission efficiency and signal quality of an optical fiber.

Outer cladding layer (Cladding) refers to an outer layer surrounding a fiber core and having a slightly lower refractive index than the fiber core. The outer cladding layer is used to retain optical signals within the fiber core by total internal reflection, thereby reducing signal loss.

Coating layer (Coating) may be composed of one or more layers of polymer materials, and its main function is to protect an optical fiber from physical damage and environmental impact.

With the advent of the information era of data explosion, the development of both the secondary industry and the tertiary industry relies heavily on high-speed communication networks. Optical fiber communication is currently the most mainstream mode of wired communication, and is widely applied due to the advantages of optical fibers such as easy raw material acquisition, small size, good confidentiality and fast transmission speed. High-speed optical communication networks have gradually developed from 10G and 40G to the commonly used 100G communication systems at present, and 400G systems are also being gradually improved. However, at present, due to the huge amount of transmitted information, excessive optical density easily causes the generation of nonlinear effect when optical signals propagate in optical fibers, resulting in an increase in signal bit error rate. To reduce the nonlinear effect of signals during transmission, reducing the optical density of optical signals is a relatively effective method. Therefore, engineers have designed an optical fiber with a large effective area, which can be applied to high-speed optical communication systems and meanwhile possesses ultra-low attenuation, and can be used in long-distance repeaterless transmission systems such as submarine cables.

An effective area of a single-mode optical fiber is related to a mode field diameter thereof. Since during signal transmission, an optical signal is not only transmitted in a core layer of an optical fiber, but also part of the signal is transmitted in a cladding layer of the optical fiber, it is not practical to express this characteristic by a fiber core diameter, so the concept of mode field diameter (MFD) is adopted to define it. In general, a mode field diameter is directly proportional to a fiber core diameter of an optical fiber, and a relationship between the mode field diameter and the effective area is shown in the following formula: ${A}_{eff} = \left(1/4\right) kπ {\left(MFD\right)}^{2} ;$ where A_{eff} represents an effective area, MFD is a mode field diameter, and K is a correction factor. It can be seen from the formula that the larger the mode field diameter, the larger the effective area.

The embodiments of the present application provide an ultralow-loss optical fiber and a method for preparing an ultralow-loss optical fiber by drawing. The optical fiber adopting the above design not only has lower attenuation but also has a larger mode field diameter (typical value 12.5 µm). The adopted gradient structure and mass percentage ensure that the optical fiber has good matching of viscous fluidity between different layers while ensuring sufficient refractive index difference, such that a preform rod has better consistency and strength after being melted. The design of the platform layers ensures that the optical fiber has a smaller cable cutoff wavelength, a typical attenuation value is 1550nm ≤ 0.17dB/km, a cable cutoff wavelength is ≤ 1500nm, and an optical fiber strength is increased by 50% to 100% compared with general optical fibers.

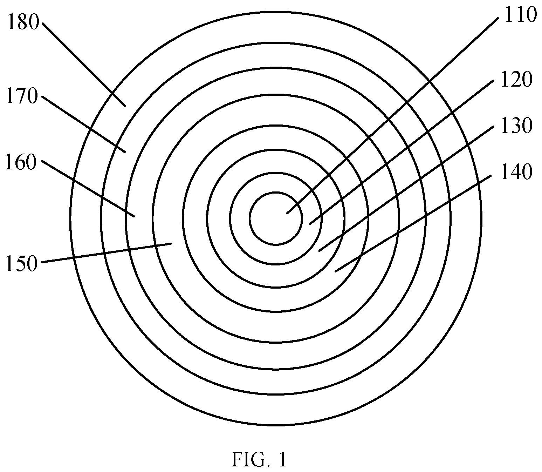

FIG. 1 is a schematic structural diagram of an ultralow-loss optical fiber according to the present application. As shown in FIG. 1, the optical fiber includes: a core layer 110, and a first gradient layer 120, a second gradient layer 130, a first platform layer 140, a second platform layer 150 and an outer cladding layer 160 sequentially surrounding an outside of the core layer 110, where a relative refractive index difference of the first gradient layer 120 and a relative refractive index difference of the second gradient layer 130 vary linearly respectively, and a minimum value of the relative refractive index difference of the first gradient layer 120 is greater than a maximum value of the relative refractive index difference of the second gradient layer 130, and a relative refractive index difference of the first platform layer 140 is greater than the maximum value of the relative refractive index difference of the second gradient layer 130.

Where, by adjusting the relative refractive index difference, various performances of the optical fiber can be improved, such as mode control, inter-modal dispersion, bandwidth, bending performance, dispersion management, nonlinear effect, signal quality, transmission distance, manufacturing tolerance, and environmental stability. These improvements enable the optical fiber to better meet the needs of different application scenarios, including high-speed data communication, long-distance transmission, high-power laser, and amplifier applications.

Meanwhile, since the minimum value of the relative refractive index difference of the first gradient layer 120 is greater than the maximum value of the relative refractive index difference of the second gradient layer 130, on the one hand, this allows for more precise control of the mode distribution and propagation characteristics within the optical fiber, optimizes the transmission performance of the optical fiber, reduces interference between different modes, and improves signal quality; on the other hand, this also enhances the bending resistance of the optical fiber, such that a larger refractive index difference can more tightly confine the optical signal within the core, thereby reducing the possibility of light escaping during bending, thus improving and reducing the attenuation of the optical fiber.

In addition, that the relative refractive index difference of the first gradient layer 120 and the relative refractive index difference of the second gradient layer 130 vary linearly respectively includes two cases: the relative refractive index difference of the first gradient layer 120 and the relative refractive index difference of the second gradient layer 130 decrease linearly in a direction away from the core layer 110, and the relative refractive index difference of the first gradient layer 120 and the relative refractive index difference of the second gradient layer 130 increase linearly in the direction away from the core layer 110. When the relative refractive index difference of the first gradient layer 120 and the relative refractive index difference of the second gradient layer 130 both increase linearly in the direction away from the core layer 110, inter-modal dispersion can be increased and specific optical characteristics can be achieved. When the relative refractive index difference of the first gradient layer 120 and the relative refractive index difference of the second gradient layer 130 both decrease linearly in the direction away from the core layer 110, inter-modal dispersion can be reduced, bandwidth and transmission distance can be increased, bending performance can be improved, and mode control can be optimized, thereby improving the transmission performance of the optical fiber.

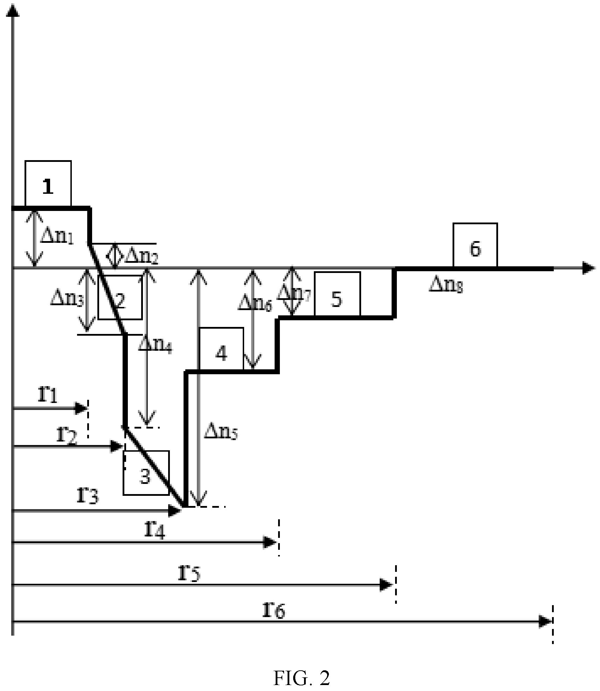

FIG. 2 is a diagram of relative refractive index differences of respective layers in an ultralow-loss optical fiber according to an embodiment of the present application. Referring to the content shown in combination with FIG. 1 and FIG. 2, the ultralow-loss optical fiber includes the following.

A core layer 110 is included, the core layer 110 has a maximum radius of r1, where r1 ranges from 5.5 µm to 7.5 µm; the core layer 110 has a relative refractive index difference of Δn1, Δn1 ranges from 0.05% to 0.15%; in an embodiment of the present application, a mass percentage of the core layer 110 satisfies:
SiO₂: GeO₂: F: P = [1-(0.2% to 2%) -(0.2% to 2%) -(0 to 0.35%)]: (0.2% to 2%): (0.05% to 0.5%): (0% to 0.35%).

A first gradient layer 120 is included, a distribution of the relative refractive index difference Δn(r) of the first gradient layer 120 satisfies: $Δn \left(r\right) = {Δn}_{2} + \left({Δn}_{3}-{Δn}_{2}\right) {\left(r-r1/r2-r1\right)}^{α 1} ;$ Δn₂ ranges from 0 to 0.05%, Δn₃ ranges from -0.2% to 0, Δn₂ is greater than Δn₃, α1 ranges from 0.5 to 2, r1 is a maximum radius of the core layer 110, r1 ranges from 5.5 µm to 7.5 µm, r2 - r1 is a radius range of the first gradient layer 120, and r2 - r1 ranges from 0.5 µm to 2 µm.

In the embodiment of the present application, silicon dioxide, germanium dioxide, fluorine and phosphorus in the first gradient layer have a mass percentage of (1-a-b-c): a: b: c, where a ranges from 0% to 1%, b ranges from 0.01% to 0.3%, and c ranges from 0 to 0.2%; in an embodiment of the present application, fluorine may refer to fluorine element, and phosphorus may refer to phosphorus element.

A second gradient layer 130 is included, a distribution of the relative refractive index difference Δn(r) of the second gradient layer 130 satisfies: $Δn \left(r\right) = {Δn}_{4} + \left({Δn}_{5}-{Δn}_{4}\right) {\left(r-r2/r3-r2\right)}^{α 2} ;$ where Δn₄ ranges from -0.45% to -0.2%, Δn₅ ranges from -0.65% to - 0.4%, Δn₄ is greater than Δn₅, α2 ranges from 0.5 to 3, r3 - r2 is a radius range of the second gradient layer 130, and r2 - r1 ranges from 4 µm to 12 µm.

In an embodiment of the present application, silicon dioxide and fluorine in the second gradient layer have a mass percentage of 1-(0.5% to 1.5%) :(0.5% to 1.5%).

A first platform layer 140 is included, the first platform layer 140 has a radius range of r3 to r4, where r4-r3 ranges from 8 µm to 20 µm; the first platform layer 140 has a relative refractive index difference of Δn6, Δn6 ranges from -0.3% to -0.1%; in an embodiment of the present application, mass percentages of the first platform layer 140 satisfy:
SiO₂: GeO₂: F= [1- (0% to 0.15%)- (0.3% to 1%)]: (0% to 0.15%): (0.3% to 1%).

A second platform layer 150 is included, the second platform layer 150 has a radius range of r4 to r5, where r5-r4 ranges from 6 µm to 15 µm; the second platform layer 150 has a relative refractive index difference of Δn7, where Δn7 ranges from -0.2% to -0.05%, and Δn7>Δn6; in an embodiment of the present application, mass percentages of the second platform layer 150 satisfy:
SiO₂: GeO₂: F= [1-(0.1% to 0.3%)- (0.15% to 0.5%)]: (0% to 0.15%): (0.3% to 1%).

An outer cladding layer 160 is included, the outer cladding layer 160 has a radius range of r5 to r6, where r6 ranges from 62 µm to 63 µm; the outer cladding layer 160 has a relative refractive index difference of Δn8=0, and a material of the outer cladding layer 160 is pure silicon dioxide.

An inner coating layer 170 is included, a material of which is acrylic resin, the material of the inner coating layer 170 satisfies: an elastic modulus of ≤ 0.7 MPa, a coating viscosity of (3000 to 8000) mPa·s at 25°C, a density of (0.95 to 1.3) g/cm³, an elongation at break of ≥125%, and an optical fiber after being coated with the inner coating layer 170 has a size of 180 µm to 205 µm.

An outer coating layer 180 is included, a material of which is acrylic resin, and the material of the inner coating layer 170 satisfies: an elastic modulus of ≥ 550 MPa, a coating viscosity of (3000 to 8000) mPa·s at 25°C, a density of (0.95 to 1.3) g/cm³, an elongation at break of ≥ 10%, and an optical fiber after being coated with the outer coating layer 180 has a size of 235 to 252 µm.

Based on this, an ultralow-loss optical fiber provided in an embodiment of the present application not only has low attenuation, but also has a large mode field diameter (typical value 12.5 µm). The structures of the first gradient layer 120 and the second gradient layer 130, as well as the mass percentages thereof, ensure that the optical fiber has good matching of viscous fluidity between different layers while ensuring sufficient refractive index difference, such that a preform rod has better consistency and strength after being melted. The design of the platform layers ensures that the optical fiber has a smaller cable cutoff wavelength, a typical attenuation value is @1550nm ≤ 0.17dB/km, a cable cutoff wavelength is ≤ 1500nm, and an optical fiber strength is increased by 50% to 100% compared with general optical fibers.

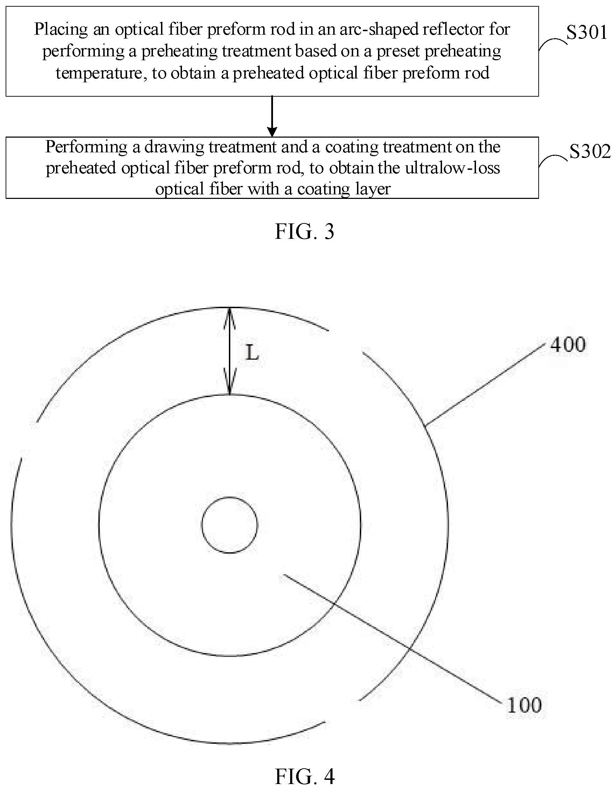

FIG. 3 is a schematic flowchart of a method for preparing an ultralow-loss optical fiber by drawing according to an embodiment of the present application. As shown in FIG. 3, the drawing preparation method includes the following steps.

In S301, placing an optical fiber preform rod in an arc-shaped reflector for performing a preheating treatment based on a preset preheating temperature, to obtain a preheated optical fiber preform rod.

Where, the preheating may be performed at a temperature of 1900°C to 2100°C.

The optical fiber preform rod may be an ultralow-loss optical fiber including a core layer, and a first gradient layer, a second gradient layer, a first platform layer, a second platform layer and an outer cladding layer sequentially surrounding an outside of the core layer according to an embodiment of the present application.

Since a doping amount in the core layer of the ultralow-loss optical fiber in the embodiment of the present application is very small, a hardness of the core layer is much softer than that of a fluorine-doped depressed cladding layer. The hardness matching leads to the fluidity matching, resulting in an existence of internal stress difference during melting. In order to reduce the viscosity mismatch, the core layer of the optical fiber preform rod is preheated before melting.

In S302, performing a drawing treatment and a coating treatment on the preheated optical fiber preform rod, to obtain the ultralow-loss optical fiber with a coating layer.

In an embodiment of the present application, the method of performing the drawing treatment and the coating treatment on the preheated optical fiber preform rod to obtain the ultralow-loss optical fiber with the coating layer may include:
placing the preheated optical fiber preform rod in a drawing furnace for performing the drawing treatment, to obtain a drawn optical fiber;
passing the drawn optical fiber sequentially through a plurality of annealing holding furnaces for performing a holding and annealing treatment, to obtain a held-and-annealed optical fiber; and
performing an optical fiber-coating treatment on the held-and-annealed optical fiber, and performing a curing treatment on a coating layer of an optical fiber obtained after the optical fiber-coating treatment, to obtain the ultralow-loss optical fiber with the coating layer.

Where, the optical fiber drawing furnace is one of an induction drawing furnace and a graphite drawing furnace.

The drawing treatment may refer to that after raising the temperature of the optical fiber drawing furnace to 1800°C to 2200°C, the preform rod is placed in the optical fiber drawing furnace for melting, and then the melted optical fiber preform rod is drawn.

Where, a melting environment inside the optical fiber drawing furnace is filled with a protective gas, and the protective gas is preferably an inert gas. In some embodiments, the protective gas includes at least one of argon and helium, and the protective gas has a flow rate of 10 L/min to 50 L/min, where, an oxygen content in the protective gas environment is ≤ 100 ppm.

The optical fiber has a drawing speed of ≥ 50 m/min. the drawing speed is set as V and an internal tension is set as g, a relationship between V and G is g = aV + b, where a ranges from 0.08 to 0.12, and b ranges from 20 to 35.

The holding and annealing treatment may refer to that the optical fiber passes through n temperature zones with different temperatures (2 ≤ n ≤ 6) along an optical fiber path, the optical fiber has a residence time of (0.1 to 1) s in the entire temperature zone, the temperatures of different annealing furnaces are set to decrease in a gradient manner from top to bottom, the optical fiber when entering the annealing zone has a temperature of 1100°C to 1600°C, and the annealed optical fiber has a temperature of 750°C to 900°C. The entire annealing process is completed in a nitrogen environment, where an oxygen content in the nitrogen environment is less than 200 ppm, and a nitrogen flow rate is (5 to 25) L/min. A circulation mode is adopted, with gas introduced from the upper path and exhausted from the lower path. By circulating nitrogen, not only can the oxygen content be reduced, but also the water molecule content in the annealing environment can be reduced.

The coating treatment of the optical fiber may refer to coating the optical fiber using an acrylic resin material. There are two layers of coating materials of the optical fiber, namely an inner layer and an outer layer, where the material of the inner layer is required to satisfy the following requirements: an elastic modulus of ≤ 0.7 MPa, a coating viscosity of (3000 to 8000) mPa·s at 25°C, a density of (0.95 to 1.3) g/cm³, and an elongation at break of ≥ 125%; the material of the outer coating layer is required to satisfy the following requirements: an elastic modulus of ≥ 550 MPa, a coating viscosity of (3000 to 8000) mPa·s at 25°C, a density of (0.95 to 1.3) g/cm³, and an elongation at break of ≥ 10%. The optical fiber after primary coating using the coating material has a size of 180 µm to 205 µm, and the optical fiber after secondary coating has a size of 235 µm to 252 µm.

The curing treatment may refer to one of UV curing (Ultraviolet Curing) or LED curing (LED Curing), and a curing environment is isolated using a non-oxygen gas. In some embodiments, the non-oxygen gas used may be at least one of nitrogen, helium, and argon. A single curing furnace has a gas flow rate of 10 L to 15 L, and an oxygen content in the curing environment is less than 50 ppm. During the curing process, when the optical fiber passes through different curing furnaces, the optical fiber is exposed to an air environment for no more than 0.04 s. After the optical fiber is cured in the curing furnaces, the inner coating layer of the optical fiber has a curing degree of 87% to 94%, and the outer layer of the optical fiber has a curing degree of 92% to 100%, where the curing degree of the outer layer shall not be less than the curing degree of the inner layer.

FIG. 4 is a schematic structural diagram of a scenario in which an optical fiber preform rod is heated by using an arc-shaped reflector according to an embodiment of the present application. As shown in FIG. 4, an optical fiber preform rod 100 is located within an arc-shaped reflector 400 during a preheating treatment. The shortest distance L between the arc-shaped reflector 400 and a surface of the optical fiber preform rod 100 is 2 cm to 15 cm. When the optical fiber preform rod 100 is preheated using the arc-shaped reflector 400, the optical fiber preform rod 100 itself radiates relatively strong diffuse reflected light when the preheating temperature is 1900°C to 2100°C. In the embodiment of the present application, by using the arc-shaped reflector 400, the diffuse reflected light is reflected and concentrated to an arc center, that is, a position where the core layer of the optical fiber preform rod 100 is located, thereby achieving the preheating treatment of the core layer of the optical fiber preform rod 100.

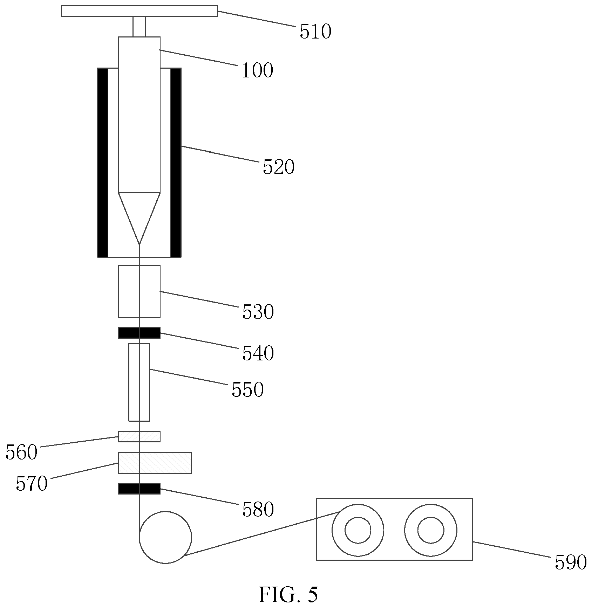

FIG. 5 is a schematic structural diagram of an optical fiber drawing apparatus according to an embodiment of the present application. As shown in FIG. 5, the optical fiber drawing apparatus includes: a rod feeder 510, an optical fiber preform rod 100, a drawing furnace 520, a holding furnace unit 530, a bare fiber testing unit 540, a bare fiber protection tube 550, a coating unit 560, a curing unit 570, an optical fiber size testing unit 580, and a take-up unit 590. Where, the rod feeder 510 is configured for conveying the preheated optical fiber preform rod 100 to the drawing furnace 520 for drawing treatment in the drawing furnace 520; the holding furnace unit 530 is configured for performing holding and annealing treatment on the drawn optical fiber preform rod 100; the bare fiber testing unit 540 and the bare fiber protection tube 550 are configured for testing the held-and-annealed bare optical fiber; the coating unit 560 is configured for coating the bare optical fiber; the curing unit 570 is configured for curing the coated bare optical fiber; the optical fiber testing unit is configured for testing the cured optical fiber; and the take-up unit 590 is configured for arranging and collecting the optical fiber.

A comparison of strengths of optical fibers under various parameters in the present invention is shown in the following table:

| Test item | Sample 1 | Sample 2 | Sample 3 | Sample 4 | Sample 5 |
|---|---|---|---|---|---|
| Δn1 | 0.1% | 0.05% | 0.15% | 0.1% | 0.05% |
| Δn2 | 0.025% | 0 | 0.05% | 0.025% | 0 |
| Δn3 | -0.1% | -0.2% | 0 | 0 | -0.2% |
| Δn4 | -0.35% | -0.45% | -0.2% | -0.35% | -0.45% |
| Δn5 | -0.55% | -0.65% | -0.45% | -0.55% | -0.5% |
| Δn6 | -0.2% | -0.3% | -0.1% | -0.2% | -0.25% |
| Δn7 | -0.125% | -0.2% | -0.05% | -0.125% | -0.15% |
| α1 | 1 | 0.5 | 2 | 1.5 | 1 |
| α2 | 1 | 0.5 | 3 | 1.5 | 2 |
| r1 | 6.5 | 5.5 | 7.5 | 6.5 | 7.5 |
| r2-r1 | 1.5 | 0.5 | 2 | 1 | 1.5 |
| r3-r2 | 8 | 4 | 12 | 6 | 8 |
| r4-r3 | 14 | 8 | 20 | 12 | 16 |
| r5-r4 | 10 | 6 | 15 | 10 | 12 |
| r6 | 62.5 | 62 | 63 | 62.5 | 62.5 |
| Strength /KPSI | 200 | 150 | 150 | 175 | 175 |

From the above description, it can be seen that the above-described embodiments of the present invention achieve the following technical effects. By the means of arranging the first gradient layer and the second gradient layer between the core layer and the platform layer, and adjusting the relative refractive index differences of the first gradient layer and the second gradient layer, the mode distribution of the optical fiber is improved, the bending loss is reduced, the material purity and structural design are improved, manufacturing defects are reduced, and the dispersion characteristics are optimized, so that the optical fiber has better consistency, and the strength is maintained above 150 KPSI.

The preferred specific embodiments and experimental verification of the present invention are described in detail above. It should be understood that those of ordinary skill in the art can make various modifications and changes according to the concept of the present invention without creative effort. Therefore, all technical solutions that can be obtained by those skilled in the art through logical analysis, reasoning, or limited experiments based on the concept of the present invention on the basis of the prior art shall fall within the protection scope defined by the claims.

## Claims

1. An ultralow-loss optical fiber, comprising:
a core layer, and a first gradient layer, a second gradient layer, a first platform layer, a second platform layer and an outer cladding layer sequentially surrounding an outside of the core layer; wherein a relative refractive index difference of the first gradient layer and a relative refractive index difference of the second gradient layer vary linearly respectively; a minimum value of the relative refractive index difference of the first gradient layer is greater than a maximum value of the relative refractive index difference of the second gradient layer; and a relative refractive index difference of the first platform layer is greater than the maximum value of the relative refractive index difference of the second gradient layer.

2. The optical fiber according to claim 1, wherein the relative refractive index difference of the first gradient layer decreases linearly in a direction away from the core layer.

3. The optical fiber according to claim 2, wherein a distribution of the relative refractive index difference Δn(r) of the first gradient layer satisfies: $Δn \left(r\right) = {Δn}_{2} + \left({Δn}_{3}-{Δn}_{2}\right) {\left(r-r1/r2-r1\right)}^{α 1} ;$ wherein Δn₂ ranges from 0 to 0.05%, Δn₃ ranges from -0.2% to 0, Δn₂ is greater than Δn₃, α1 ranges from 0.5 to 2, r1 is a maximum radius of the core layer, r1 ranges from 5.5 µm to 7.5 µm, r2 - r1 is a radius range of the first gradient layer, and r2 - r1 ranges from 0.5 µm to 2 µm.

4. The optical fiber according to claim 1, wherein silicon dioxide, germanium dioxide, fluorine, and phosphorus in the first gradient layer have a mass percentage of (1-a-b-c): a: b: c, wherein a ranges from 0% to 1%, b ranges from 0.01% to 0.3%, and c ranges from 0 to 0.2%.

5. The ultralow-loss optical fiber according to claim 1, wherein the relative refractive index difference of the second gradient layer decreases linearly in a direction away from the core layer.

6. The optical fiber according to claim 5, wherein a distribution of the relative refractive index difference Δn(r) of the second gradient layer satisfies: $Δn \left(r\right) = {Δn}_{4} + \left({Δn}_{5}-{Δn}_{4}\right) {\left(r-r2/r3-r2\right)}^{α 2} ;$ wherein Δn₄ ranges from -0.45% to -0.2%, Δn₅ ranges from -0.65% to -0.4%, Δn₄ is greater than Δn₅, α2 ranges from 0.5 to 3, r3 - r2 is a radius range of the second gradient layer, and r2 - r1 ranges from 4 µm to 12 µm.

7. The optical fiber according to claim 1, wherein silicon dioxide and fluorine in the second gradient layer have a mass percentage of 1-(0.5% to 1.5%) :(0.5% to 1.5%).

8. A method for preparing an ultralow-loss optical fiber by drawing, wherein the method is used for preparing the ultralow-loss optical fiber according to any one of claims 1-8, the method comprising:
placing an optical fiber preform rod in an arc-shaped reflector for performing a preheating treatment based on a preset preheating temperature, to obtain a preheated optical fiber preform rod; and
performing a drawing treatment and a coating treatment on the preheated optical fiber preform rod, to obtain the ultralow-loss optical fiber with a coating layer.

9. The method according to claim 8, wherein the preheating temperature has a range of 1900°C to 2100°C, a distance between the arc-shaped reflector and the optical fiber preform rod is 2 cm to 15 cm, and a reflection center of the arc-shaped reflector, to which diffuse reflected light generated by heating the optical fiber preform rod is reflected, is a core layer of the optical fiber preform rod.

10. The method according to claim 8, wherein the performing the drawing treatment and the coating treatment on the preheated optical fiber preform rod to obtain the ultralow-loss optical fiber with the coating layer comprises:
placing the preheated optical fiber preform rod in a drawing furnace for performing the drawing treatment, to obtain a drawn optical fiber;
passing the drawn optical fiber sequentially through a plurality of annealing holding furnaces for performing a holding and annealing treatment, to obtain a held-and-annealed optical fiber; and
performing an optical fiber-coating treatment on the held-and-annealed optical fiber, and performing a curing treatment on a coating layer of an optical fiber obtained after the optical fiber-coating treatment, to obtain the ultralow-loss optical fiber with the coating layer.

11. The method according to claim 10, wherein a temperature in the drawing furnace for melting is 1800°C to 2200°C, the drawing furnace is filled with a protective gas, wherein the protective gas comprises at least one of argon and helium, and the protective gas has a flow rate of 10 L/min to 50 L/min.

12. The method according to claim 10, wherein in the drawing treatment, a drawing speed V and an internal tension g satisfy: g=eV+f, wherein e ranges from 0.08 to 0.12, and f ranges from 20 to 35.

13. The method according to claim 10, wherein the coating layer comprises an inner coating layer and an outer coating layer, wherein an optical fiber, obtained after the inner coating layer is applied, has a size of 180 µm to 205 µm, and an optical fiber, obtained after the outer coating layer is applied, has a size of 235 µm to 252 µm.

14. The method according to claim 13, wherein a material of the inner coating layer and a material of the outer coating layer are both acrylic resin, wherein:
the acrylic resin for the inner coating layer satisfies: an elastic modulus of ≤0.7 MPa, a coating viscosity of (3000 to 8000) mPa·s at 25°C, a density of (0.95 to 1.3) g/cm³, and an elongation at break of ≥ 125%;
the acrylic resin for the outer coating layer satisfies: an elastic modulus of ≥ 550 MPa, a coating viscosity of (3000 to 8000) mPa·s at 25°C, a density of (0.95 to 1.3) g/cm³, and an elongation at break of ≥ 10%.
